# EUROPÄISCHE PATENTANMELDUNG

(11) **EP 4 712 320 A1**
(43) Veröffentlichungstag der Anmeldung: **18.03.2026**
(21) Anmeldenummer: 24200669.0
(22) Anmeldetag: 16.09.2024
(51) Int. Cl.: H02K 15/027, B32B 37/12, C09J 5/06, H01F 3/02, H01F 41/02, H02K 15/0273, H02K 15/121

(54) **STANZPAKETIERVERFAHREN MIT KLEBE- UND AUSHÄRTUNGSSCHRITT**

(71) Anmelder: Stanzwerk AG, 5035 Unterentfelden (CH)
(72) Erfinder: Lehmann, Frédéric, 5724 Dürrenäsch (CH); Holzer, Patrick, 5012 Schönenwerd (CH); Woodtli, Marcel, 5040 Schöftland (CH)
(74) Vertreter: Stolmár & Partner Intellectual Property GmbH

(57) **Zusammenfassung**

Die vorliegende Erfindung bezieht sich auf ein Verfahren zum Herstellen von verklebten Blechpaketen (1) für einen Rotor und/oder Stator mittels Stanzpaketieren von Elektroblechen (2) mit einem Stanzwerkzeug (6) umfassend i) das Auftragen eines wärmehärtenden Klebstoffs (3) in Form von mindestens einem Klebstoffpunkt (31) auf mindestens eine Seite des Elektroblechs (2), ii) das Stanzen einer Lamelle (5) aus dem Elektroblech (2), und iii) das Überführen der gestanzten Lamelle (5) in ein im Stanzwerkzeug (6) angeordnetes geheiztes Rohr (61), in welchem die gestanzten Lamellen (5) zu einem Blechpaket (1) gestapelt und verklebt werden und der Klebstoff (3) im geheizten Rohr (61) härtet, wobei der Klebstoff (3) mit mindestens einer Klebstoffdüse (41) je Lamelle (5) auf das Elektroblech (2) aufgetragen wird, wobei a) die Klebstoffdüse (41) eine Bohrung (42) mit einem Innendurchmesser von 1 mm oder weniger, bevorzugt 0.5 mm oder weniger, insbesondere 0.2 mm oder weniger, und/oder b) der Klebstoff (3) eine Viskosität von höchstens 500 mPas aufweist.

Beansprucht werden auch verklebte Blechpakete (1) erhältlich nach dem Verfahren, eine Klebstoffdosiervorrichtung (4* zur Dosierung des Klebstoffs (3), ein Stanzwerkzeug (6*) umfassend die Klebstoffdosiervorrichtung (4*), sowie die Verwendung der verklebten Blechpakete (1) und die nach dem Verfahren erhaltenen Blechpakete (1).

## Beschreibung

Die vorliegende Erfindung bezieht sich auf ein Verfahren zum Herstellen von verklebten Blechpaketen, verklebte Blechpakete erhältlich nach dem erfindungsgemässen Verfahren, eine Klebstoffdosiervorrichtung zur Dosierung des Klebstoffs im Verfahren, ein Stanzwerkzeug umfassend mindestens eine erfindungsgemässe Klebstoffdosiervorrichtung, sowie die Verwendung der erfindungsgemässen und erfindungsgemäss hergestellten Blechpakete.

Stanzen von flachen Werkstoffen wie Bleche ist ein schon seit geraumer Zeit bekanntes Verfahren, um auf einfache Art und Weise auch komplexe Formen in einem oder mehreren Stanzschritten herzustellen. Der gestanzte Werkstoff kann anschliessend weiterverarbeitet, beispielsweise geformt, werden.

In jüngerer Zeit wurden auch Verfahren entwickelt, welche es erlauben, gestanzte, flache Werkstoffe aufeinander zu schichten und miteinander zu verbinden, sodass ein dreidimensionaler Körper mit komplexer Struktur entstehen kann. Dabei wird typischerweise der Werkstoff - in der Regel ein Blech - herstellerseitig mit einem vernetzbaren Klebstoff beschichtet. Solche Bleche werden auch «Backlack-beschichtete Elektrobleche» genannt. Nach dem Stanzen werden die erhaltenen flächigen Teile, auch Lamellen genannt, aufeinandergeschichtet und nachfolgend bei erhöhten Temperaturen und erhöhtem Druck ausgesetzt, sodass der Klebstoff vernetzt. Die so erhaltenen Blechpakete weisen eine hohe Festigkeit auf. Dieses Verfahren wird auch «Stanzen und Verbinden» genannt, wobei ein bevorzugtes Verfahren unter dem Begriff "Stanzpaketieren" bekannt ist.

In der Praxis werden Rotoren und Statoren für Elektromotoren oft mit dem genannten Verfahren «Stanzen und Verbinden» hergestellt. Dabei hat sich gezeigt, dass ein wichtiger Faktor für die Effizienz von Elektromotoren - und somit der darin verbauten Rotoren und Statoren - der Anteil des Elektroblechs ist, d.h. mit höherem Anteil an Elektroblech je Rotor resp. Stator steigt auch deren Effizienz.

Mit vernetzendem Klebstoff vorbeschichtete Elektrobleche sind nicht nur teuer, sondern der Klebstoff weist auch eine gewisse minimale Schichtdicke auf, die auf Seiten des Verarbeiters von Blechpaketen nicht unterschritten werden kann. Dadurch werden dem Verarbeiter Möglichkeiten genommen, die gestanzten Blechpakete weiter zu optimieren, um beispielsweise die Effizienz der hergestellten Rotoren und Statoren zu erhöhen. Denn wenn die Klebschicht zwischen den einzelnen Lamellen reduziert werden kann, steigt auch die Effizient der Rotoren und Statoren - und somit der Elektromotoren.

Daher ist es die Aufgabe der vorliegenden Erfindung, ein Verfahren zur Herstellung von Blechpaketen bereit zu stellen, welches auf einfache Art und Weise ermöglicht, nicht nur die Schichtdicke zwischen den einzelnen Lamellen zu variieren, sondern dass auch nur so wenig Klebstoff aufgetragen werden kann, dass im Wesentlichen lediglich die Oberflächenrauheit der einzelnen Lamellen ausgefüllt wird und die Lamellen trotzdem fest miteinander verbunden sind.

Diese komplexe Aufgabe konnte überraschenderweise gelöst werden mit einem Verfahren zum Herstellen von verklebten Blechpaketen (1) nach Anspruch 1.

Beansprucht werden auch verklebte Blechpakete (1) erhältlich nach dem erfindungsgemässen Verfahren nach Anspruch 10.

Zudem wird auch eine Klebstoffdosiervorrichtung (4*) gemäss Anspruch 11 beansprucht zur Dosierung des Klebstoffs (3) im erfindungsgemässen Verfahren beansprucht.

Beansprucht wird auch ein Stanzwerkzeug (6*) gemäss Anspruch 13, umfassend ein heizbares Rohr (61) und mindestens eine erfindungsgemässe Klebstoffdosiervorrichtung (4*).

Des Weiteren wird die Verwendung der nach dem erfindungsgemässen Verfahren erhaltenen und verklebten Blechpakete (1) und/oder der erfindungsgemässen verklebten Blechpakete (1) gemäss Anspruch 14 beansprucht.

Das erfindungsgemässe Verfahren, die erfindungsgemässen verklebten Blechpakete (1), die erfindungsgemässe Klebstoffdosiervorrichtung (4*), das erfindungsgemässe Stanzwerkzeug (6*), sowie die erfindungsgemässe Verwendung bieten überraschenderweise viele Vorteile.

Das erfindungsgemässe Verfahren erlaubt einerseits das Dosieren von Kleinstmengen an Klebstoff (3) und andererseits an sehr niederviskosem Klebstoff (3). Beides erlaubt die Herstellung von äusserst dünnen Klebstoffschichtdicken, beispielsweise von wenigen Mikrometer oder sogar unterhalb einem Mikrometer. Zudem können auch äusserst schmale Bereiche von beispielsweise wenigen Millimetern Breite problemlos verklebt werden, ohne dass Klebstoff aus dem Blechpaket (1) fliesst. Dadurch wird der Klebstoffanteil im Verfahren wie auch in den verklebten Blechpaketen (1) minimiert, obwohl alle Bereiche verklebt werden können. Zudem wird auch der Anteil an Elektroblech (2) erhöht, was die Effizienz der Rotoren und Statoren, d.h. der Blechpakete (1), und somit der Elektromotoren, die diese enthalten, erhöht. Zudem muss eine kleinere Menge an Klebstoff (3) erhitzt werden, wodurch dieser bei gleicher Temperatur schneller aushärtet.

Alternativ ist es möglich, die gleiche Aushärtungsgeschwindigkeit bei niedriger Temperatur zu erhalten. Dies ist oft bevorzugt um die Verformung der Lamellen (5) und der verklebten Blechpakete (1) zu minimieren. Zudem wird dazu weniger Energie benötigt.

Die erfindungsgemässe Klebstoffdosiervorrichtung (4*) erlaubt das Dosieren von Klebstoffen mit sehr geringer Viskosität, beispielsweise von 150 mPas oder weniger, wie auch von Kleinstmengen an Klebstoff (3) auf die auszustanzenden Lamellen (5). Auch ist es möglich eine grosse Vielzahl, beispielsweise 200 oder mehr, Klebstoffpunkte (31) je Lamelle (5) aufzutragen. Eine solch grosse Anzahl an Klebstoffpunkten (31) erlaubt wiederum, dass jeder Klebstoffpunkte (31) nur eine geringe Menge an Klebstoff (3) umfasst, wodurch die Schichtdicke des Klebstoffs (3) wiederum geringgehalten werden kann, da nur wenig Klebstoff (3) je Klebstoffpunkt (31) verdrängt werden muss. Dabei kann bei Bedarf trotzdem ein grosser Teil der Oberfläche einer Lamelle (5) mit Klebstoff bedeckt werden, inkl. schmale, filigrane Teile einer Lamelle (5).

Das erfindungsgemässe Stanzwerkzeug (6*) umfassend das heizbare Rohr (61) und mindestens eine erfindungsgemässe Klebstoffdosiervorrichtung (4*) erlaubt einerseits das Dosieren von kleinsten Klebstoffpunkten (31) mit Kleinstmengen an Klebstoff (3) und somit die Herstellung der erfindungsgemässen Blechpakete (1). Aufgrund der dünnen Klebstoffschicht - und somit der geringen Menge an Klebstoff - erhitzt dieser im heizbaren Rohr (61) schneller als bei dickeren Klebstoffschichten, wodurch im heizbaren Rohr (61) auch bei weniger hohen Temperaturen eine genügende Aushärtung des Klebstoffs (3) erfolgt, sodass die erhaltenen Blechpakete (1) eine genügend hohe Festigkeit aufweisen, dass sie beim unteren Rohrausgang des Rohrs (61) problemlos entfernt und gestapelt werden können.

Die erhaltenen Blechpakete (1) weisen in deren Verwendung eine erhöhte Effizienz auf, d.h. bei gleichen Dimensionen einen höheren Anteil an gestanztem Elektroblech.

### Das Verfahren

Das erfindungsgemässe Verfahren ist besonders geeignet zum Herstellen von verklebten Blechpaketen (1) für einen Rotor und/oder Stator mittels Stanzpaketieren von Elektroblechen (2) mit einem Stanzwerkzeug (6). Geeignete Elektrobleche (2) sind kommerziell erhältlich und weisen zumindest auf einer Seite eine Isolationsschicht auf, jedoch keine Klebe- resp. Backlack-Schicht.

Das Verfahren umfasst
i) das Auftragen eines wärmehärtenden Klebstoffs (3) in Form von mindestens einem Klebstoffpunkt (31) auf mindestens eine Seite des Elektroblechs (2), wobei der Klebstoffauftrag mit mindestens einer Klebstoffdosiervorrichtung (4) umfassend mindestens eine Klebstoffdüse (41) erfolgt, wobei je Klebstoffdüse (41) ein Klebstoffpunkt (31) erhalten wird. Dabei erfolgt der Klebstoffauftrag - wie auch die nachfolgenden Schritte ii) und iii) - während dem Stanzprozess und innerhalb des Stanzwerkzeugs (6);
ii) das Stanzen einer Lamelle (5) aus dem Elektroblech (2), wobei der mindestens eine Klebstoffpunkt (31) auf der zu stanzenden Lamelle (5) angeordnet wird; und
iii) das Überführen der gestanzten Lamelle (5) in ein im Stanzwerkzeug (6) angeordnetes geheiztes Rohr (61), wobei die Lamelle (5) im Rohr (61) mit der zuvor und/oder der nachfolgend gestanzten Lamellen (5) zu einem Blechpaket (1) gestapelt und verklebt wird, wobei der Klebstoff (3) im geheizten Rohr (61) härtet, wodurch die einzelnen Lamellen (5) eines Blechpakets (1) miteinander verbunden, d.h. verklebt, und gegebenenfalls auch vernetzt, werden,
wobei der Klebstoff (3) mit mindestens einer Klebstoffdüse (41) je Lamelle (5) auf das Elektroblech (2) aufgetragen wird, wobei
a) die Klebstoffdüse (41) eine Bohrung (42) mit einem Innendurchmesser von 1 mm oder weniger, bevorzugt 0.5 mm oder weniger, insbesondere 0.2 mm oder weniger, und ganz besonders bevorzugt 0.15 mm oder weniger, aufweist, und/oder
b) der wärmehärtende Klebstoff (3) eine Viskosität von höchstens 500 mPas, gemessen bei 25°C mit einem Kegel-Platten-System mit Kegeldurchmesser von 75 mm und einer Scherrate von 1000 s-1, aufweist.

Der im erfindungsgemässen Verfahren eingesetzte Klebstoff ist ein wärmehärtender Klebstoff (3), d.h. er reagiert unter Wärme und nicht bei Raumtemperatur. Somit muss lediglich eine Klebstoffklasse eingesetzt werden, was nicht nur den Einsatz des Klebstoffsystems vereinfacht, sondern auch die Handhabe der Klebstoffdosiervorrichtung (4). Denn bei einem Unterbruch der Klebstoffdosierung besteht keine Gefahr, dass der Klebstoff (3) zumindest teilweise in der Klebstoffdosiervorrichtung (4) reagiert, wodurch Letztere im schlimmsten Fall bei verklebten Klebstoffdüsen (41) ganz ersetzt werden müsste.

Der Klebstoffauftrag mit der Klebstoffdosiervorrichtung (4) auf das Elektroblech (2) erfolgt typischerweise innerhalb des Stanzwerkzeugs (6) und mittels einer Vertikalbewegung entweder der Klebstoffdosiervorrichtung (4) oder des Elektroblechs (2), wobei letzteres bevorzugt ist. Die Vertikalbewegung kann beispielsweise mittels eines Schiebers (47) betätigt werden. Dabei berührt das Elektroblech (2) vorteilhafterweise die Klebstoffdüsen (41) nicht, sondern nur den Klebstoff (3), welcher in Form eines KlebstoffTropfens ist, welcher an der Düse (41) angebracht ist. So nähern sich das Elektroblech (2) und die Klebstoffdüsen (41) bevorzugt etwa bis auf die halbe Tropfengrösse des Klebstoffs (3) einander an. Dabei erfolgt die Benetzung des Elektroblechs (2) durch den Klebstoff (3). Wenn sich das Elektroblech (2) und der Klebstoff (3) wieder voneinander entfernen, reisst der Klebstoff (3) entweder innerhalb des Tropfens oder oft an der Oberfläche der Klebstoffdüse (41) ab, wodurch der Klebstoffpunkt (31) an der Oberfläche des Elektroblechs (2) entsteht. Überraschenderweise ist es möglich, diesen Vorgang mit einer Hubzahl von bis zu 600 Hübe pro Minute oder mehr durchzuführen, wobei für den Klebstoffauftrag das Elektroblech (2) bevorzugt den Klebstofftropfen, nicht aber die Klebstoffdüse (41) berührt.

Die Klebstoffdosiervorrichtung (4) kann ober- und/oder unterhalb des Elektroblechs (2) angeordnet sein. Dabei hat sich gezeigt, dass es oft vorteilhaft ist, dass die Klebstoffdosiervorrichtung (4) unterhalb des Elektroblechs (2) angeordnet ist und die Klebstoffpunkte (31) von unten auf die Unterseite des Elektroblechs (2) appliziert werden.

Das geheizte Rohr (61) des Stanzwerkzeugs (6) ist bevorzugt direkt unterhalb der Stanzeinheit, welche die Lamelle (5) aus dem Elektroblech (2) stanzt, angeordnet. Dadurch wird die frisch gestanzte Lamelle (5) direkt von den vorher gestanzten Lamellen (5) aufgenommen und durch Verkleben der einzelnen Lamellen (5) das Blechpaket (1) geformt. Dabei ist das geheizte Rohr (61) bevorzugt nach unten leicht verjüngt, wodurch ein bestimmter Druck benötigt wird, um die geformten Blechpakete (1) aus dem Rohr (61) auszustossen. Dieser Druck wird durch die von oben eingeführten frisch gestanzten Lamellen (5), welche beim Stanzprozess nach unten ins Rohr (61) gedrückt werden, erzeugt. Dadurch werden die Blechpakete (1) im Rohr (61) gestapelt, durch die erhöhte Temperatur im Rohr (61) verklebt und durch den erzeugten Druck auch verpresst. Dabei härtet der aufgetragene Klebstoff (3) in den Blechpaketen (1) zumindest teilweise, wodurch diese eine genügend grosse Stabilität erhalten, um auf einfache Art und Weise weiter verarbeitet zu werden. Der Klebstoff (3) kann während diesem Schritt vollständig härten, oder die Blechpakete (1) können nachfolgend für einen zusätzlichen Wärmeschritt beispielsweise in einem externen Ofen mit oder ohne Druckbelastung fertig ausgehärtet werden.

In einer bevorzugten Ausführungsform wird auf das Elektroblech (2) vor dem Stanzen der ersten und/oder letzten Lamelle (5) kein Klebstoff (3) aufgetragen, wodurch die einzelnen Blechpakete (1) an deren flachen Oberflächen frei von Klebstoff (3) sind. Entsprechend kleben die Blechpakete (1) nicht aneinander.

Die Anzahl der Klebstoffpunkte (31) wird bevorzugt so gewählt,
- dass diese mindestens 10%, bevorzugt 20 bis 80%, insbesondere 30 bis 70%, und/oder
- dass der Klebstoff (3) der Klebstoffpunkte (31) nach Verkleben der Lamellen (5) 20 bis 100%, bevorzugt 30 bis 90%, insbesondere 40 bis 80%,
der Oberfläche einer Lamelle (5) bedecken. Dabei kann die Anzahl der Klebstoffpunkte (31) aufgrund der Kundenbedürfnisse optimal eingestellt werden.

In einer ganz bevorzugten Ausführungsform weist der Klebstoff (3) eine Viskosität von höchstens 250 mPas, insbesondere von höchstens 150 mPas, gemessen bei 25°C mit einem Kegel-Platten-System mit Kegeldurchmesser von 75 mm und einer Scherrate von 1000 s⁻¹, auf. Diese niedrige Viskosität des Klebstoffs (3) erlaubt den Einsatz von Klebstoffdüsen (41) mit dem erfindungsgemässen, sehr geringem Innendurchmessers der Bohrung (42) von z.T. deutlich kleiner als 1 mm.

Der Klebstoff (3) weist in einer bevorzugten Ausführungsform olefinische Gruppen auf, welche mittels radikalischer Polymerisation unter Wärmebelastung reagieren, d.h. polymerisieren, d.h. aushärten. Dabei wird die Polymerisation oft mittels eines Aktivators initiiert. Die radikalische Polymerisation kann die einzige Härtungsreaktion sein. Alternativ umfasst der Klebstoff (3) noch weitere reaktive Gruppen und/oder Klebstoffkomponenten, welche während der Wärmebelastung reagieren. Eine bevorzugte Substanzklasse umfasst Acrylate und Methacrylate, welche zusätzlich noch funktionelle Gruppen wie beispielsweise Amin-, Amid-, Hydroxy-, Epoxy-, Carbonsäure-, Isocyanat- und/oder Urethangruppen aufweisen können. Dabei umfasst der Klebstoff (3) bevorzugt einen Aktivator, um die radikalische Polymerisation zu starten. Der Aktivator kann beispielsweise lediglich unter Wärmebelastung im geheizten Rohr (61) aktiviert werden. Geeignete Aktivatoren umfassen organische Peroxide und/oder organische Diazoverbindungen. Der Aktivator kann gegebenenfalls auch zusätzlich ein Reduktionsmittel umfassen, welche beispielsweise die Peroxid-Komponente aktiviert. Dadurch erfolgt die Aktivierung des Aktivators bei niedrigeren Temperaturen als ohne Reduktionsmittel.

In einer anderen bevorzugten Ausführungsform ist der Klebstoff (3)
- ein 1-K Klebstoff, d.h. ein Einkomponenten-Klebstoff, und wird somit als eine Komponente mittels der mindestens einen Klebstoffdüse (41) auf das Elektroblech (2) aufgetragen. Ein solcher 1-K Klebstoff vereinfacht auch die Handhabe der Klebstoffdosiervorrichtung (4), da nur eine Komponente dosiert werden muss. Dabei umfasst der 1-K Klebstoff typischerweise einen Aktivator, beispielsweise in Form eines organischen Peroxids, Persulfats oder Diazoverbindung, welcher in der Regel werkseitig den anderen Klebstoffkomponenten zugegeben wird. Dieser Aktivator ist daher bevorzugt bei Lager- und Transportbedingungen nicht reaktiv, sodass ungewollt keine Polymerisation, d.h. keine Aushärtung, des Klebstoffs ausgeführt wird. Bei erhöhter Temperaturen wie sie typischerweise im geheizten Rohr (61) auftreten, beispielsweise bei 70°C, 85°C oder höher, zersetzt sich der Aktivator thermisch, sodass der Klebstoff (3) ausreagieren, d.h. aushärten, kann; oder
- ein mindestens 2-K Klebstoff, d.h. ein Zwei- oder Mehrkomponenten-Klebstoff, welcher somit als mindestens zwei Komponenten vorliegt. Der mindestens 2-K Klebstoff umfasst eine nicht- oder wenig reaktive Hauptkomponente (3a) und als separate Komponente einen Aktivator (3b), wobei die Hauptkomponente (3a) des Klebstoffs (3) mittels der Klebstoffdüse (41) auf das Elektroblech (2) aufgetragen wird, wodurch ein Klebstoffpunkt (31a) erhalten wird.

Geeignete 1-K oder 2-K Klebstoffe (3), welche heisshärtend sind, d.h. unter Wärmebelastung reagieren, sind dem Fachmann bekannt. Nicht-limitierende Beispiele geeigneter Klebstoffe (3) umfassen reaktive Acrylat-, PU-Acrylat- und Urethanacrylat-Klebstoffe. Diese Klebstoffe (3) basieren oft auf einzelnen Monomeren, welche eine entsprechend niedrige Viskosität aufweisen, beispielsweise von höchstens 500 mPas, oder sogar 100 mPas oder weniger, gemessen bei 25°C mit einem Kegel-Platten-System mit Kegeldurchmesser von 75 mm und einer Scherrate von 1000 s-1. Diese Klebstoffe (3) enthalten typischerweise olefinische Gruppen, welche mittels radikalischer Polymerisation unter Wärmebelastung reagieren, wobei die Polymerisation beispielsweise mittels organischem Peroxid, Persulfat oder einer organischer Azoverbindung als Aktivator initiiert werden kann.

Der Aktivator (3b) kann eine oder mindestens zwei Komponenten umfassen. Umfasst der Aktivator (3b) eine zweite Komponente, ist diese bevorzugt in Form eines Reduktionsmittels, beispielsweise Natriumhydroxymethylsulfinate. Dabei ist die erste Komponente bevorzugt ein Oxidationsmittel, typischerweise in Form eines organischen Peroxids, Persulfats oder organischer Azoverbindung, wodurch ein Redox-System erhalten wird.

Liegt der Aktivator (3b) in Form von zwei Komponenten vor, ist eine Komponente (3b2) des Aktivators (3b) bevorzugt Teil der Hauptkomponente (3a) und die andere Komponente (3b2) Teil des Aktivators (3b), welche
- mittels einer weiteren Klebstoffdosiervorrichtung (4a) mit Klebstoffdüse (41a) in Form eines Klebstoffpunkts (31b) auf das Elektroblech (2) aufgetragen, wobei der Auftrag des Klebstoffpunkts (31b), in Bezug auf den Klebstoffpunkt (31) der Hauptkomponente (3a), auf der gleichen oder entgegengesetzten Seite des Elektroblechs (2) aufgetragen wird,
- flächig, beispielsweise mittels Rolle oder Spray, und bevorzugt vor dem Auftrag der Hauptkomponente (3a), auf das Elektroblech (2) aufgetragen, oder
- in die Klebstoffdüse (41) und somit der Hauptkomponente (3a) des Klebstoffs (3) zugeführt wird, wodurch die Hauptkomponente (3a) und beide Aktivatorkomponenten (3b1, 3b2) des Aktivators (3b) gemeinsam auf das Elektroblech (2) aufgetragen werden.

Mittels eines solchen zweikomponentigen Aktivatorsystems (3b1, 3b2) und dessen Applikation kann die Reaktionstemperatur zur Aushärtung des Klebstoffs (3) weiter gesenkt werden, da nicht die einzelnen Komponenten, sondern erst deren Kombination miteinander reagiert.

Die separate Aktivator-Komponente (3b2) kann auf der gleichen oder auf der - relativ zum Auftrag der Hauptkomponente (3a) - anderen Seite des Elektroblechs (2) aufgetragen werden. Erfolgt der Auftrag der Komponenten (3a) und (3b2) auf der zueinander entgegengesetzten Seite, treten die Hauptkomponente (3a) und die separate Aktivatorkomponente (3b2) erst im geheizten Rohr (61) aufeinander, sodass der Klebstoffpunkt (31) der einen Lamelle (5) mit dem Klebstoffpunkt (31b) der benachbarten Lamelle (5) im Rohr (61) in Kontakt treten, wodurch die Verklebungsreaktion beginnt. Dadurch können sie im Vorfeld - beispielsweise bei Stanzunterbrüchen - nicht ungewünscht reagieren und die Klebstoffdosiervorrichtung (4) u.a. mit den Klebstoffdüsen (41) kann bei Bedarf problemlos gereinigt werden.

Bei Blechpaketen (1) mit einem Durchmesser von
- 1 bis 9 cm werden bevorzugt insgesamt 3 bis 30, insbesondere 3 bis 12, und/oder
- 10 bis 50 cm werden bevorzugt insgesamt 30 bis 200, insbesondere 60 bis 140,

Klebstoffpunkte (31) je Lamelle (5) aufgetragen. Aufgrund der grossen Anzahl möglicher Klebpunkte (31) je Lamelle (5) kann die Tropfengrösse des Klebstoffs (3) entsprechend klein gehalten werden, da bei kleinen Tropfengrössen eine relativ geringe Oberfläche der Lamelle (5) bedeckt wird. Diese wiederum erlaubt eine sehr exakte Positionierung der Tropfen und somit der Klebeflächen, auch auf sehr schmalen, filigranen Teilen der Lamelle (5).

In einer bevorzugten Ausführungsform
- Reagiert der Klebstoff (3) bei einer Temperatur von 70°C oder höher, bevorzugt 85°C oder höher, insbesondere 100°C oder höher. Eine solche Reaktionstemperatur des Klebstoffs ist hoch genug, damit auch ein 1-K Klebstoff bei normalen Lager- und Transportbedingungen nicht reagiert, und niedrig genug um eine schnelle Aushärtung des Klebstoff bei relativ niedriger Wärmebelastung für die Lamellen (5) und Blechpakete (1) zu ermöglichen, ohne dass sich diese aufgrund der Wärme zu stark ausdehnen;
- Beträgt die Temperatur der Wand des Rohrs (61) zwischen 80°C und 300°C, bevorzugt zwischen 90°C und 250°C, insbesondere zwischen 100°C und 220°C. Dabei ist die Wandtemperatur höher, bevorzugt mindestens 5°C, insbesondere mindestens 10°C, als die gewünschte Reaktionstemperatur des Klebstoffs (3). Dies ermöglicht einen schnellen Wärmeübergang vom Rohr (61) zum auszuhärtenden Blechpaket (1);
- Beträgt die Verweilzeit der Blechpakete (1) im Rohr (61) zwischen 0.5 und 10 Minuten, bevorzugt zwischen 0.75 und 7 Minuten, insbesondere zwischen 1 und 4 Minuten. Dabei hängt die Verweilzeit u.a. auch von der Temperaturdifferenz des Rohrs (61) zur Reaktionstemperatur des Klebstoffs (3), vom gewünschten Aushärtungsgrad des Klebstoffs sowie den Dimensionen der Blechpakete (1) ab; und/oder
- Werden die Lamellen (5) der Blechpakete (1) im unteren Bereich des Rohrs (61) mit einem Druck von 0.2 bis 10 kN, bevorzugt von 0.3 bis 7 kN, insbesondere von 0.4 bis 4 kN, zusammengepresst. Dabei kann der Druck beispielsweise mittels Kraftmessdose bestimmt werden. Durch den Druck, welcher beispielsweise durch eine entsprechende Verjüngung des Rohrs (61) im unteren Bereich erhalten werden kann, wird der aufgetragene Klebstoff (3) in den Blechpaketen (1) stark zusammengepresst, sodass der Klebstoff (3) eine Schichtdicke von wenigen Mikrometern, oder sogar deutlich unterhalb eines Mikrometers aufweist. Dabei füllt der Klebstoff (3) insbesondere die Oberflächenrauheit aus, sodass an gewissen Stellen gegebenenfalls nur eine äusserst dünne Klebstoffschicht erhalten wird. Dies erlaubt pro Blechpaket (1) einen höheren Anteil an Elektroblech (2), wodurch die Effizienz der Blechpakete (1), insbesondere der Statoren und Rotoren, erhöht wird.

### Die verklebten Blechpakete (1)

Die erfindungsgemäss verklebten Blechpakete (1), erhältlich nach dem erfindungsgemässen Verfahren, weisen alle Merkmale und Vorteile der Blechpakete (1) auf, welche nach dem beanspruchten Verfahren erhalten werden, insbesondere die äusserst dünne Klebstoffschicht und der damit verbundene hohe Anteil an Elektroblech je Blechpaket (1). Dabei können auch äusserst schmale Bereiche, beispielsweise wenige Millimeter breit, problemlos verklebt werden.

### Die Klebstoffdosiervorrichtung (4*)

Die erfindungsgemässe Klebstoffdosiervorrichtung (4*) ist geeignet zur Dosierung des Klebstoffs (3) im erfindungsgemässen Verfahren und umfasst mindestens eine Klebstoffdüse (41*) mit einer Bohrung (42) mit einem Innendurchmesser von 0.5 mm oder weniger, bevorzugt 0.2 mm, oder weniger, insbesondere 0.15 mm oder weniger.

Die Klebstoffdosiervorrichtung (4*) ist bevorzugt aus Metall, Kunststoff und/oder Keramik gefertigt.

Die Klebstoffdosiervorrichtung (4*) umfasst typischerweise einen flächigen Grundkörper, an welchem die Klebstoffdüsen (41*) angebracht sind. Der Grundkörper ist beispielsweise mit einem Schlauch verbunden, in welchem der Klebstoff (3) von einem Reservoir zum Grundkörper mittels Pumpe transportiert wird und von dort weiter zu den einzelnen Düsen (41*). Dabei ist es auch mögliche, dass der Schlauch vor dem Grundkörper mit einer Verteilstation verbunden ist, welche den Klebstoff (3) schon vorher aufteilt, wodurch eine einzelne oder wenige Düsen (41*) separat mit Klebstoff (3) versorgt werden können.

Geeignete Klebstoffdüsen (41*) sind im Handel erhältlich und können mit dem Grundkörper verbunden werden. Alternativ können die Klebstoffdüsen (41*) mit den Bohrungen (42*) mittels Erosion aus dem Grundkörper mittels bekannter Verfahren erodiert hergestellt werden.

Die Klebstoffdosiervorrichtung (4*) weist bevorzugt mindestens eine Klebstoffzufuhr (43*) mit Pumpe (45*) zur Förderung des Klebstoffs (3) auf, wobei die Klebstoffzufuhr (43*) beispielsweise in Form eines Schlauchs ist, ein Klebstoffverteilsystem (44*), welches vor dem Grundkörper angeordnet und/oder Teil davon sein kann, mindestens drei Klebstoffdüsen (41*), sowie gegebenenfalls ein Klebstoffauffangsystem für nicht auf das Elektroblech (2) aufgebrachten Klebstoff (3), auf. Zudem umfasst die Klebstoffdosiervorrichtung (4*) typischerweise einen Vorratsbehälter (46*) zur Aufnahme des Klebstoffs (3). Dieser wird mittels Pumpe (45*) durch die Klebstoffzufuhr (43*) und das Klebstoffverteilsystem (44*) zu den Klebstoffdüsen (41*) gefördert, wo er auf des Elektroblech (2) aufgebracht wird.

### Das Stanzwerkzeug (6*)

Das erfindungsgemässe Stanzwerkzeug (6*) umfasst ein heizbares Rohr (61) und mindestens eine erfindungsgemässe Klebstoffdosiervorrichtung (4*) und ist besonders geeignet zum Herstellen der erfindungsgemässen Blechpakete (1) und/oder für den Einsatz im erfindungsgemässen Verfahren.

Das erfindungsgemässe Stanzwerkzeug (6*) und das im erfindungsgemässen Verfahren eingesetzte Stanzwerkzeug (6) benötigen beim Stanzprozess - und insbesondere beim Klebstoffauftrag - eine besonders hohe Präzision. Denn je geringer der Innendurchmesser der Bohrung (42, 42*) der Klebstoffdüse (41, 41*) ist, desto kleiner ist der auf der Klebstoffdüse (41, 41*) gebildete Klebstofftropfen. Entsprechend steigt die Anforderung an die Präzision des Stanzwerkzeugs (6, 6*), da sich beim Klebstoffauftrag die Klebstoffdüse (41, 41*) und das Elektroblech (2) bevorzugt nicht berühren sollen. Denn bei einem Innendurchmesser der Bohrung (42, 42*) von beispielsweise 0.2 mm beträgt der Durchmesser des Klebstofftropfens - je nach Menge, Viskosität und Kohäsion des Klebstoffs (3) - beispielsweise 1 mm oder weniger. Entsprechend müssen sich das Elektroblech (2) und die Klebstoffdüse (41, 41*) bis auf beispielsweise 0.5 mm annähern, um den Klebstoffpunkt (31) zu erhalten. Dies erfordert auch, dass insbesondere bei Klebstoffdosiervorrichtungen (4) mit beispielsweise 200 Klebstoffdüsen (41, 41*) die Klebstoffdosiervorrichtungen (4) und das Elektroblech (2) absolut parallel zueinander sein müssen. Und wenn das Stanzwerkzeug (6, 6*) pro Minute bis zu 600 Hübe oder mehr macht, benötigt das Stanzwerkzeug (6, 6*) eine entsprechend hohe Präzision, damit die Klebstoffdüsen (41, 41*) nicht zerstört werden.

### Die Verwendung

Die nach dem erfindungsgemässen Verfahren erhaltenen und verklebten Blechpakete (1) und/oder die erfindungsgemäss verklebten Blechpakete (1) erhältlich nach erfindungsgemässen Verfahren werden bevorzugt als Bauteile für Elektromotoren, insbesondere als Statoren oder Rotoren, und/oder als Transformatorenbleche verwendet.

Es werden folgende Bezugszeichen verwendet:
- (1): Blechpaket (1)
- (2): Elektroblech (2)
- (3): Wärmehärtender Klebstoff (3)
- (3a): Hauptkomponente (3a) des Klebstoffs (3)
- (3b): Aktivator (3b) des Klebstoffs (3)
- (31): Klebstoffpunkt (31)
- (31a): Klebstoffpunkt (31a) der Hauptkomponente (3a) des Klebstoffs (3)
- (31b): Klebstoffpunkt (31b) des Aktivators (3b) des Klebstoffs (3)
- (4): Klebstoffdosiervorrichtung (4)
- (4a): weitere Klebstoffdosiervorrichtung (4a)
- (41): Klebstoffdüse (41)
- (41a): Klebstoffdüse (41a) der weiteren Klebstoffdosiervorrichtung (4a)
- (42): Bohrung (42) der Klebstoffdüse (41)
- (4*): Erfindungsgemässe Klebstoffdosiervorrichtung (4*)
- (41*): Klebstoffdüse (41*) der beanspruchten Klebstoffdosiervorrichtung (4*)
- (43*): Klebstoffzufuhr (43*)
- (44*): Klebstoffverteilsystem (44*)
- (45*): Pumpe (45*) zur Förderung des Klebstoffs (3)
- (46*): Vorratsbehälter (46*) für den Klebstoff (3) und/oder des Schiebers (47, 47*)
- (47*): Schieber (47*) zur vertikalen Betätigung der Klebstoffvorrichtung (4, 4*)
- (5): Lamelle (5)
- (6): Stanzwerkzeug (6)
- (61): geheiztes Rohr (61) im Stanzwerkzeug (6)
- (6*): Erfindungsgemässes Stanzwerkzeug (6*)

Im Folgenden werden nicht-limitierende, bevorzugte Ausführungsformen des erfindungsgemässen Verfahrens, der erfindungsgemässen Klebstoffdosiervorrichtung (4*) und des erfindungsgemässen Stanzwerkzeugs (6*) anhand der nachfolgenden Zeichnungen beschrieben, die nicht einschränkend auszulegen sind und als Bestandteil der Beschreibung verstanden werden:

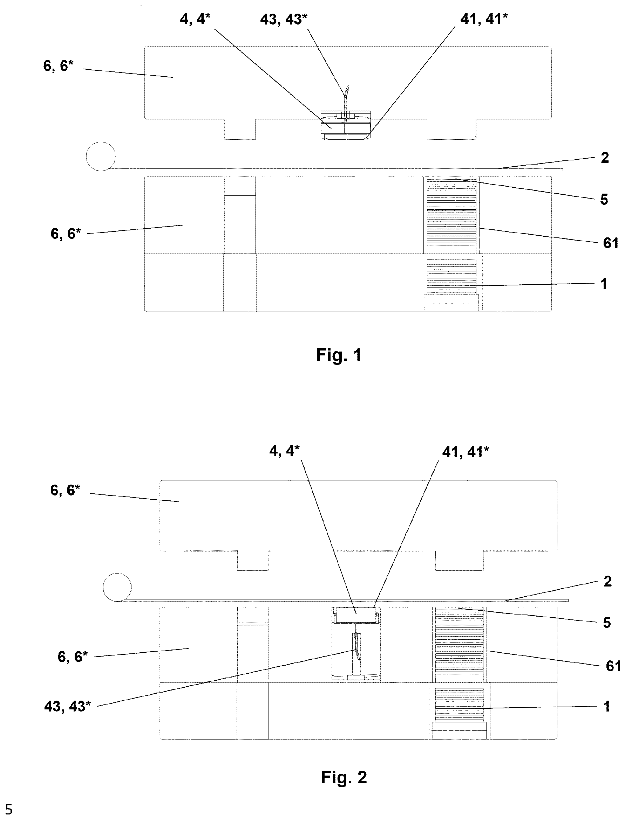

- Fig. 1: zeigt eine schematische, beispielhafte Darstellung des Stanzwerkzeugs (6, 6*), in welches das Elektroblech (2) eingeführt und gestanzt wird. In der Mitte des oberen Teils des Stanzwerkzeugs (6, 6*) ist die Klebstoffdüse (41, 41*) angeordnet, mit welcher der Klebstoffauftrag auf denjenigen Teil des Elektroblechs (2) erfolgt, aus welchem mittels Stanzvorgang die Lamelle (5) gestanzt wird. Mit dem gleichen Stanzvorgang wird die Lamelle (5) in das geheizte Rohr (61) befördert, welches im unteren Teil des Stanzwerkzeugs (6, 6*) angeordnet ist. Im Rohr (61) werden die Lamellen (5) mit Klebstoff (3) zu Blechpaketen (1) zusammengepresst, wobei aufgrund der erhöhten Temperatur im Rohr (61) der Klebstoff (3) erwärmt und aushärtet, wodurch sich die einzelnen Lamellen (5) zu einem verfestigten Blechpaket (1) formen. Die Klebstoffdosiervorrichtung (4, 4*) mit den Klebstoffdüsen (41, 41*) und der Klebstoffzufuhr (43, 43*) ist beispielhaft im oberen Teil des Stanzwerkzeugs (6, 6*) integriert, wobei für den Klebstoffauftrag entweder das Elektroblech (2) nach oben in Richtung Klebstoffdosiervorrichtung (4, 4*), oder die Klebstoffdosiervorrichtung (4, 4*) nach unten in Richtung Elektroblech (2) befördert wird.
- Fig. 2: zeigt analog Fig. 1 eine schematische, beispielhafte Darstellung des Stanzwerkzeugs (6, 6*) bei welchem die Klebstoffdosiervorrichtung (4, 4*) im unteren Teil des Stanzwerkzeugs (6, 6*) angebracht ist.

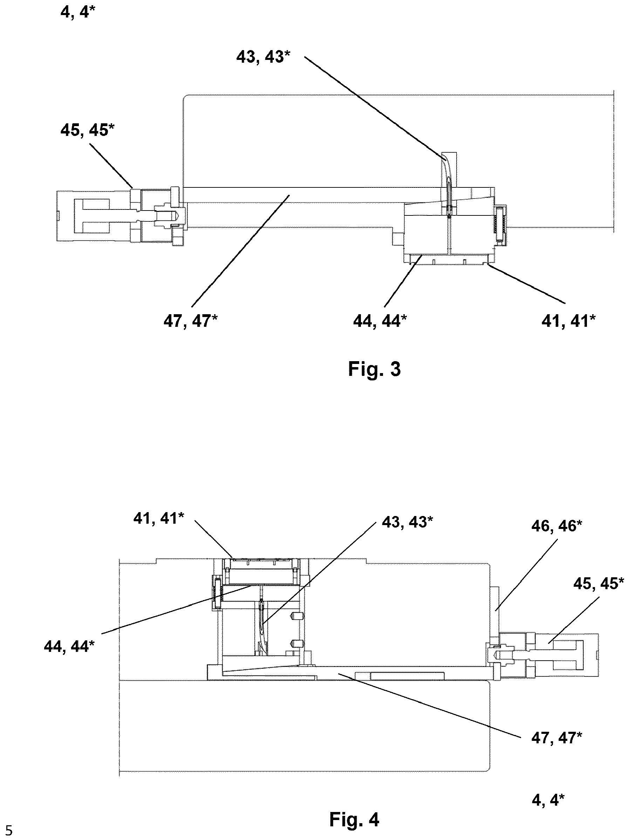

- Fig. 3: zeigt eine schematische, beispielhafte Darstellung der Klebstoffdosiervorrichtung (4, 4*) der Fig. 1, welche im oberen Teil des Stanzwerkzeugs (6, 6*) angeordnet ist. Die dargestellte Klebstoffdosiervorrichtung (4, 4*) umfasst die Klebstoffdüsen (41, 41*), die Klebstoffzufuhr (43, 43*), das Klebstoffverteilsystem (44, 44*), die Pumpe (45, 45*) - hier zur Betätigung des Schiebers (47, 47*) zur vertikalen Betätigung der Klebstoffdosiervorrichtung (4, 4*), sowie einen Vorratsbehälter (46, 46*; nicht dargestellt) für den Klebstoff (3). Zwischen Pumpe (45, 45*) und Auftragskopf der Klebstoffdosiervorrichtung (4, 4*) umfassend die Klebstoffdüsen (41, 41*) ist der Schieber (47, 47*) dargestellt, welcher den Auftragskopf für den Klebstoffauftrag auf das Elektroblech (2) nach unten bewegt.
- Fig. 4: zeigt analog Fig. 3 eine schematische, beispielhafte Darstellung der Klebstoffdosiervorrichtung (4, 4*) der Fig. 2, welche im unteren Teil des Stanzwerkzeugs (6, 6*) angeordnet ist. Dargestellt ist neben den Klebstoffdüsen (41, 41*), der Klebstoffzufuhr (43, 43*), dem Klebstoffverteilsystem (44, 44*), dem Vorratsbehälter (46, 46*) zur Aufnahme des Klebstoffs (3) auch die Pumpe (45, 45*), welche den Schieber (47, 47*) betätigt. Durch Betätigen des Schiebers (47, 47*) bewegt sich der Auftragskopf der Klebstoffdosiervorrichtung (4, 4*) mit den Klebstoffdüsen (41, 41*) für den Klebstoffauftrag auf das Elektroblech (2) vertikal.

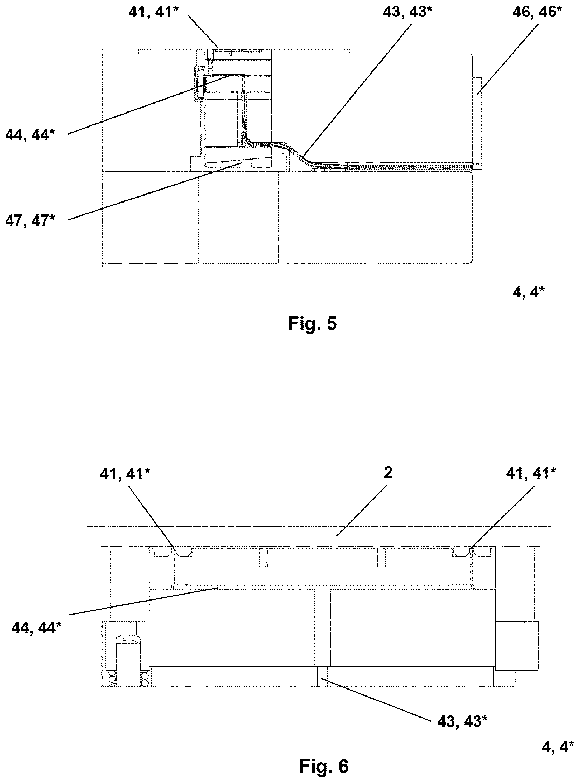

- Fig. 5: zeigt eine seitliche Darstellung der Klebstoffdosiervorrichtung (4, 4*) der Fig. 4, bei welcher die Klebstoffzufuhr (43, 43*) gezeigt ist. Diese führt vom Vorratsbehälter (46, 46*) mit Klebstoff (3) über das Klebstoffverteilsystem (44, 44*) zu den Klebstoffdüsen (41, 41*).
- Fig. 6: zeigt einen Ausschnitt der Klebstoffdosiervorrichtung (4, 4*) der Fig. 5 mit dem Auftragskopf der Klebstoffdosiervorrichtung (4, 4*) mit beispielhaft zwei Klebstoffdüsen (41, 41*), der Klebstoffzufuhr (43, 43*) und dem Klebstoffverteilsystem (44, 44*). In der Darstellung ist auch das Elektroblech (2) gezeigt, welches von der unterhalb des Elektroblechs (2) angeordneten Klebstoffdosiervorrichtung (4, 4*) mit Klebstoff (3, nicht dargestellt) versehen wird.

## Patentansprüche

1. Verfahren zum Herstellen von verklebten Blechpaketen (1) für einen Rotor und/oder Stator mittels Stanzpaketieren von Elektroblechen (2) mit einem Stanzwerkzeug (6) umfassend
i) das Auftragen eines wärmehärtenden Klebstoffs (3) in Form von mindestens einem Klebstoffpunkt (31) auf mindestens eine Seite des Elektroblechs (2), wobei der Klebstoffauftrag mit mindestens einer Klebstoffdosiervorrichtung (4) umfassend mindestens eine Klebstoffdüse (41) erfolgt, wobei je Klebstoffdüse (41) ein Klebstoffpunkt (31) erhalten wird,
ii) das Stanzen einer Lamelle (5) aus dem Elektroblech (2), wobei der mindestens eine Klebstoffpunkt (31) auf der Lamelle (5) angeordnet wird, und
iii) das Überführen der gestanzten Lamelle (5) in ein im Stanzwerkzeug (6) angeordnetes geheiztes Rohr (61), wobei die Lamelle (5) im Rohr (61) mit der zuvor und/oder der nachfolgend gestanzten Lamellen (5) zu einem Blechpaket (1) gestapelt und verklebt wird, wobei der Klebstoff (3) im geheizten Rohr (61) härtet, wodurch die einzelnen Lamellen (5) eines Blechpakets (1) miteinander verbunden werden,
wobei der Klebstoff (3) mit mindestens einer Klebstoffdüse (41) je Lamelle (5) auf das Elektroblech (2) aufgetragen wird, **dadurch gekennzeichnet, dass**
a) die Klebstoffdüse (41) eine Bohrung (42) mit einem Innendurchmesser von 1 mm oder weniger, bevorzugt 0.5 mm oder weniger, insbesondere 0.2 mm oder weniger, aufweist, und/oder
b) der wärmehärtende Klebstoff (3) eine Viskosität von höchstens 500 mPas, gemessen bei 25°C mit einem Kegel-Platten-System mit Kegeldurchmesser von 75 mm und einer Scherrate von 1000 s-1, aufweist.

2. Verfahren nach Anspruch 1, **dadurch gekennzeichnet, dass** auf das Elektroblech (2) vor dem Stanzen der ersten und/oder letzten Lamelle (5) kein Klebstoff (3) aufgetragen wird, wodurch die einzelnen Bleichpakete (1) an deren flachen Oberflächen frei von Klebstoff (3) sind.

3. Verfahren nach Anspruch 1 oder 2, **dadurch gekennzeichnet, dass** die Anzahl der Klebstoffpunkte (31) so gewählt wird,
- dass diese mindestens 10%, bevorzugt 20 bis 80%, insbesondere 30 bis 70%, und/oder
- dass der Klebstoff (3) der Klebstoffpunkte (31) nach Verkleben der Lamellen (5) 20 bis 100%, bevorzugt 30 bis 90%, insbesondere 40 bis 80%,
der Oberfläche einer Lamelle (5) bedecken.

4. Verfahren nach mindestens einem der Ansprüche 1 bis 3, **dadurch gekennzeichnet, dass** der Klebstoff (3) eine Viskosität von höchstens 250 mPas, insbesondere von höchstens 150 mPas, gemessen bei 25°C mit einem Kegel-Platten-System mit Kegeldurchmesser von 75 mm und einer Scherrate von 1000 s⁻¹, aufweist.

5. Verfahren nach mindestens einem der Ansprüche 1 bis 4, **dadurch gekennzeichnet, dass** der Klebstoff (3) olefinische Gruppen aufweist, welche mittels radikalischer Polymerisation und unter Wärmebelastung reagieren.

6. Verfahren nach mindestens einem der Ansprüche 1 bis 5, **dadurch gekennzeichnet, dass** der Klebstoff (3)
- ein 1-K Klebstoff ist und somit als eine Komponente mittels der mindestens einen Klebstoffdüse (41) auf das Elektroblech (2) aufgetragen wird, oder
- ein mindestens 2-K Klebstoff ist umfassend eine nicht- oder wenig reaktive Hauptkomponente (3a) und als separate Komponente einen Aktivator (3b), wobei die Hauptkomponente (3a) des Klebstoffs (3) mittels der Klebstoffdüse (41) auf das Elektroblech (2) aufgetragen wird, wodurch ein Klebstoffpunkt (31a) erhalten wird.

7. Verfahren nach Anspruch 6, **dadurch gekennzeichnet, dass** der Aktivator (3b) in Form von zwei Komponenten vorliegt, wobei eine Komponente (3b1) des Aktivators (3b) bevorzugt Teil der Hauptkomponente (3a) ist und die andere Komponente (3b2) des Aktivators (3b)
- mittels einer weiteren Klebstoffdosiervorrichtung (4a) mit Klebstoffdüse (41a) in Form eines Klebstoffpunkts (31b) auf das Elektroblech (2) aufgetragen wird, wobei der Auftrag des Klebstoffpunkts (31b), in Bezug auf den Klebstoffpunkt (31) der Hauptkomponente (3a), auf der gleichen oder entgegengesetzten Seite des Elektroblechs (2) aufgetragen wird,
- flächig, beispielsweise mittels Rolle oder Spray, und bevorzugt vor dem Auftrag der Hauptkomponente (3a), auf das Elektroblech (2) aufgetragen wird, oder
- in die Klebstoffdüse (41) und somit der Hauptkomponente (3a) des Klebstoffs (3) zugeführt wird, wodurch die Hauptkomponente (3a) und beide Aktivatorkomponenten (3b1, 3b2) des Aktivators (3b) gemeinsam auf das Elektroblech (2) aufgetragen werden.

8. Verfahren nach mindestens einem der Ansprüche 1 bis 7, **dadurch gekennzeichnet, dass** für Blechpakete (1) mit einem Durchmesser von
- 1 bis 9 cm insgesamt 3 bis 30, insbesondere 3 bis 12, und/oder
- 10 bis 50 cm insgesamt 30 bis 200, insbesondere 60 bis 140, Klebstoffpunkte (31) je Lamelle (5) aufgetragen werden.

9. Verfahren nach mindestens einem der Ansprüche 1 bis 8, **dadurch gekennzeichnet, dass**
- Der Klebstoff (3) bei einer Temperatur von 70°C oder höher, bevorzugt 85°C oder höher, insbesondere 100°C oder höher, reagiert,
- Die Temperatur der Wand des Rohrs (61) zwischen 80°C und 300°C, bevorzugt zwischen 90°C und 250°C, insbesondere zwischen 100°C und 220°C, beträgt,
- Die Verweilzeit der Blechpakete (1) im Rohr (61) zwischen 0.5 min. und 10 min., bevorzugt zwischen 0.75 min und 7 min., insbesondere zwischen 1 min und 4 min., beträgt, und/oder
- Die Lamellen (5) der Blechpakete (1) im unteren Bereich des Rohrs (61) mit einem Druck von 0.2 bis 10 kN, bevorzugt von 0.3 bis 7 kN, insbesondere von 0.4 bis 4 kN, zusammengepresst werden.

10. Verklebte Blechpakete (1) erhältlich nach dem Verfahren nach mindestens einem der Ansprüche 1 bis 9.

11. Klebstoffdosiervorrichtung (4*) zur Dosierung des Klebstoffs (3) im Verfahren gemäss mindestens einem der Ansprüche 1 bis 9, umfassend mindestens eine Klebstoffdüse (41*) mit einer Bohrung (42) mit einem Innendurchmesser von 0.5 mm oder weniger, bevorzugt 0.2 mm oder weniger.

12. Klebstoffdosiervorrichtung (4*) nach Anspruch 11, **dadurch gekennzeichnet, dass** die Klebstoffdosiervorrichtung (4) mindestens eine Klebstoffzufuhr (43*) mit Pumpe (45*) zur Förderung des Klebstoffs (3), ein Klebstoffverteilsystem (44*), mindestens drei Klebstoffdüsen (41*), einen Vorratsbehälter (46*) zur Aufnahme des Klebstoffs (3) sowie gegebenenfalls ein Klebstoffauffangsystem aufweist.

13. Stanzwerkzeug (6*) umfassend ein heizbares Rohr (61) und mindestens eine Klebstoffdosiervorrichtung (4*) nach Anspruch 11 oder 12 zum Herstellen der Blechpakete (1) gemäss Anspruch 10 und/oder mit dem Verfahren nach mindestens einem der Ansprüche 1 bis 9.

14. Verwendung der nach mindestens einem der Ansprüche 1 bis 9 erhaltenen und verklebten Blechpakete (1) und/oder der verklebten Blechpakete (1) nach Anspruch 10 als Bauteile für Elektromotoren, insbesondere als Statoren oder Rotoren, und/oder als Transformatorenbleche.
